**Europäisches Patentamt**

**European Patent Office**

**Office européen des brevets**

(19)

(11) Veröffentlichungsnummer: **0 039 401**
**A1**

(12)

# EUROPÄISCHE PATENTANMELDUNG

(21) Anmeldenummer: **81101878.7**

(22) Anmeldetag: **13.03.81**

(51) Int. Cl.³: **F 24 J 3/02**

(30) Priorität: **06.05.80 DE 3017225**

(43) Veröffentlichungstag der Anmeldung: **11.11.81**
**Patentblatt 81/45**

(84) Benannte Vertragsstaaten: **AT BE CH FR GB IT LI LU NL SE**

(71) Anmelder: **Meeth, Ernst Josef, D-5561 Wallscheid (DE)**

(72) Erfinder: **Metzen, Norbert, Schleifweg 2, D-5561 Spangdahlem (DE)**

(74) Vertreter: **Schönherr, Wolfgang et al, Patentanwälte Wolfgang Schönherr Dipl.-Ing. Karl-Heinz Serwe Hawstrasse 28, D-5500 Trier (DE)**

(54) **Wärmestrahlen-Kollektor zum Einbau in Fenster-, Tür-, Dachöffnungen od. dgl.**

(57) Dieses Element hat zwei im Abstand zueinander angeordnete und durch einen umlaufenden Rahmen (3) gasdicht miteinander verbundene Platten (1 und 2), wobei mindestens die in Einfallsrichtung der Wärmestrahlen liegende Platte lichtdurchlässig ist.

Zur Absorption der Energie der einfallenden Wärmestrahlen ist der Hohlraum (6) zwischen den Platten mindestens zu 10 Volumenprozent mit Kohlendioxyd ($CO_2$) gefüllt.

EP 0 039 401 A1

Zum Einbau in Fenster-, Tür-, Dachöffnungen o.dgl. bestimmtes
Element zur Absorption der Energie von Wärmestrahlen

Die Erfindung betrifft ein zum Einbau in Fenster-, Tür-,
Dachöffnungen o.dgl. bestimmtes Element zur Absorption der
Energie von Wärmestrahlen, bestehend aus zwei im Abstand
zueinander angeordneten und durch einen umlaufenden Rahmen
gasdicht miteinander verbundenen Platten, wobei die in
Einfallsrichtung der Wärmestrahlen liegende Platte lichtdurchlässig ist und wobei in dem von den Platten und dem
umlaufenden Rahmen begrenzten Hohlraum ein Wärmestrahlenenergie absorbierendes Medium angeordnet ist.

Bekannte derartige Elemente weisen den Nachteil auf, daß
die Energie der einfallenden Wärmestrahlen z.B. des
Sonnenlichtes nur ungenügend absorbiert wird.

Nachteilig ist weiterhin, daß diese bekannten Elemente
in der Regel nur für einen ganz bestimmten Zweck bestimmt
sind, beispielsweise als Wärmedämmelement oder als Sonnenenergie aufnehmendes und die aufgenommene Energie an
einen Wärmetauscher abgebendes Element.

Die Aufgabe der Erfindung besteht darin, ein Element der eingangs genannten Art vorzuschlagen, das bei vielseitiger Verwendungsmöglichkeit und bei einfacher und kostensparender Herstellungsweise eine hohe Absorption der Energie der auftretenden Wärmestrahlen ermöglicht.

Die Aufgabe wird dadurch gelöst, daß der Hohlraum mindestens zu 10 Volumenprozent mit Kohlendioxyd gefüllt ist.

Vorteilhaft sind beide Platten als lichtdurchlässige Glasscheiben ausgebildet. Bei einer bevorzugten Ausführungsform sind die den Hohlraum begrenzenden Rahmenflächen gewellt, gerippt oder gefaltet ausgebildet. Vorzugsweise sind im Rahmen Kanäle zur Aufnahme von Wärmeübertragungsmitteln angeordnet. Bei einer vorteilhaften Ausführungsform ist in den Kanälen ein Medium hoher Wärmeleitfähigkeit angeordnet und sind die Kanäle mit einem einen Wärmetauscher aufweisenden Wärmekreislauf verbunden.

Vorzugsweise sind in einander gegenüberliegenden Rahmenabschnitten verschließbare Durchtrittsöffnungen für das Kohlendioxyd angeordnet. Die Durchtrittsöffnungen sind vorzugsweise mit einem einen Wärmetauscher aufweisenden Wärmekreislauf verbunden.

Bei einer bevorzugten Ausführungsform ist auf der der Einfallsrichtung der Wärmestrahlen abgewandten Seite des Elementes im Abstand zu den beiden Platten eine weitere Platte angeordnet und durch einen umlaufenden Rahmen gasdicht mit dem Element verbunden, ist im von den Platten sowie dem umlaufenden Rahmen begrenzten Hohlraum ein Medium mit hoher Wärmeleitfähigkeit angeordnet und steht der Hohlraum mit einem einen Wärmetauscher aufweisenden Kreislauf in Verbindung.

Vorzugsweise sind alle drei Platten als lichtdurchlässige Glasplatten ausgebildet.

Bei einer weiteren vorteilhaften Ausführungsform ist die mittlere Platte als dünne, eine hohe Wärmeleitfähigkeit aufweisende Trennwand ausgebildet. Vorzugsweise ist die Trennwand zur Vergrößerung der Oberfläche

- 4 -

gewellt, gefaltet oder gerippt ausgebildet. Vorteilhaft ist die mittlere Trennwand schwarz.

Die weitere Platte ist vorzugsweise als isolierende Platte ausgebildet.

Der Druck des im Hohlraum angeordneten Kohlendioxyds beträgt vorteilhaft maximal 2 bar.

Vorzugsweise ist dem im Hohlraum angeordneten Kohlendioxyd ein Stabilisatorgas zugeordnet.

Die Erfindung ist in den Zeichnungen beispielhaft dargestellt. Es zeigen:

Fig. 1 ein Element im Querschnitt,

Fig. 2 ein Element mit gewellt ausgebildeten Rahmenflächen im Querschnitt,

Fig. 3 ein Element mit angeschlossenem Wärmekreislauf im Querschnitt,

Fig. 4 eine andere Ausführungsform eines Elementes mit angeschlossenem Wärmekreislauf im Querschnitt,

Fig. 5 eine weitere Ausführungsform eines Elementes mit angeschlossenem Wärmekreislauf im Querschnitt.

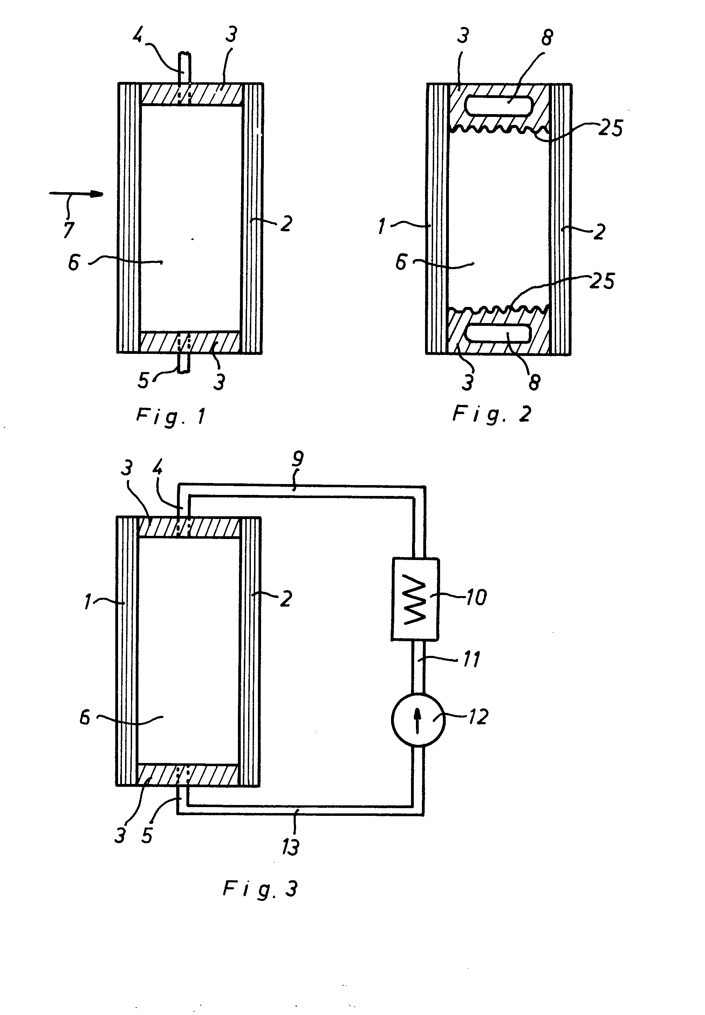

Nach Fig. 1 hat ein Element zur Absorption des einfallenden Sonnenlichtes zwei im Abstand zueinander angeordnete Platten 1 und 2, die als lichtdurchlässige Glasplatten ausgebildet sind. Die Glasplatten sind durch einen umlaufenden Rahmen 4 im Abstand zueinander gehalten und gasdicht miteinander verbunden. In einander gegenüberliegenden Rahmenabschnitten des Rahmens 3 sind Durchtrittsöffnungen 4 und 5 angeordnet.

In dem von den Platten und dem umlaufenden Rahmen begrenzten Hohlraum 6 ist Kohlendioxyd ($CO_2$) mit einem

maximalen Druck von 2 bar angeordnet.

Dieses Element nach Fig. 1 ist beispielsweise als Wärmedämmelement zum Einsatz in Fenstern oder Türen bestimmt.

Das tagsüber in Richtung des mit 7 bezeichneten Pfeiles einfallende Sonnenlicht erfährt durch die Glasplatte 1 eine Spektralverschiebung zum Infrarotbereich hin. Weiterhin wird das in den Hohlraum 6 gelangende Licht, insbesondere der Infrarotanteil des Lichtes vom Kohlendioxyd absorbiert. Somit erhitzt sich bei diesem Element nach Fig. 1 bei einfallendem Sonnenlicht das Kohlendioxyd und bewirkt so, daß das durch die Glasplatte 2 fallende Licht kühl ist, also geringe Anteile von Wärmestrahlung enthält. Weiterhin bewirkt die Verwendung des beschriebenen Elementes wegen seiner guten Wärmedämmeigenschaft und wegen des dann in umgekehrter Richtung verlaufenden, oben beschriebenen Effekts auch nachts einen geringeren Strahlungsverlust.

Bei der Herstellung des Elementes nach Fig. 1 wird durch die Durchtrittsöffnung 5 Kohlendioxyd in den Hohlraum 6 eingeführt, wobei die Durchtrittsöffnung 4 als Luftaustrittsöffnung wirkt. Beide Öffnungen werden nach vollständigem Füllen des Hohlraumes 6 mit Kohlendioxyd verschlossen. Es kann jedoch auch vorgesehen sein, die Durchtrittsöffnung 5 mit einem Kohlendioxyd-Behälter zum Druckausgleich zu verbinden.

Bei der Ausführungsform eines Elementes nach Fig. 2 sind die den Hohlraum 6 begrenzenden Rahmenflächen 25 zur Vergrößerung der Oberfläche gewellt ausgebildet. Ferner sind im Rahmen 3 Kanäle 8 angeordnet, in denen ein Wärmeübertragungsmedium angeordnet sein kann und die mit einem einen Wärmetauscher aufweisenden Wärmekreislauf in Verbindung stehen können. Dadurch wird gewährleistet, daß das Kohlendioxyd im Hohlraum 6 seine Wärmeenergie an den Rahmen abgeben kann und so im gesamten Hohlraum 6 eine nur mäßig steigende oder fallende Temperatur erzielt wird. Der Rahmen wirkt so als Wärmespeicher oder -puffer.

Nach Fig. 3 ist das in Fig. 1 beschriebene Element mit einem Wärmekreislauf verbunden. Dazu ist mit der Durchtrittsöffnung 4 eine Leitung 9 verbunden, die mit einem Wärmetauscher 10 in Verbindung steht. Mit dem Wärmetauscher 10 ist über eine Leitung 11 eine Umwälzpumpe 12 verbunden, die wiederum über eine Leitung 13 mit der Durchtrittsöffnung 5 verbunden ist.

Durch die Pumpe 12 wird das im Hohlraum 6 befindliche Kohlendioxyd, das durch das Einfallen von Wärmestrahlen erhitzt wird, in den Wärmetauscher transportiert, in dem es seine Energie abgibt und abgekühlt wieder in den Hohlraum 6 zurückgelangt. Die im Wärmetauscher 10 auftretende Energie kann gespeichert werden und beispielsweise nachts zur Heizung verwandt werden.

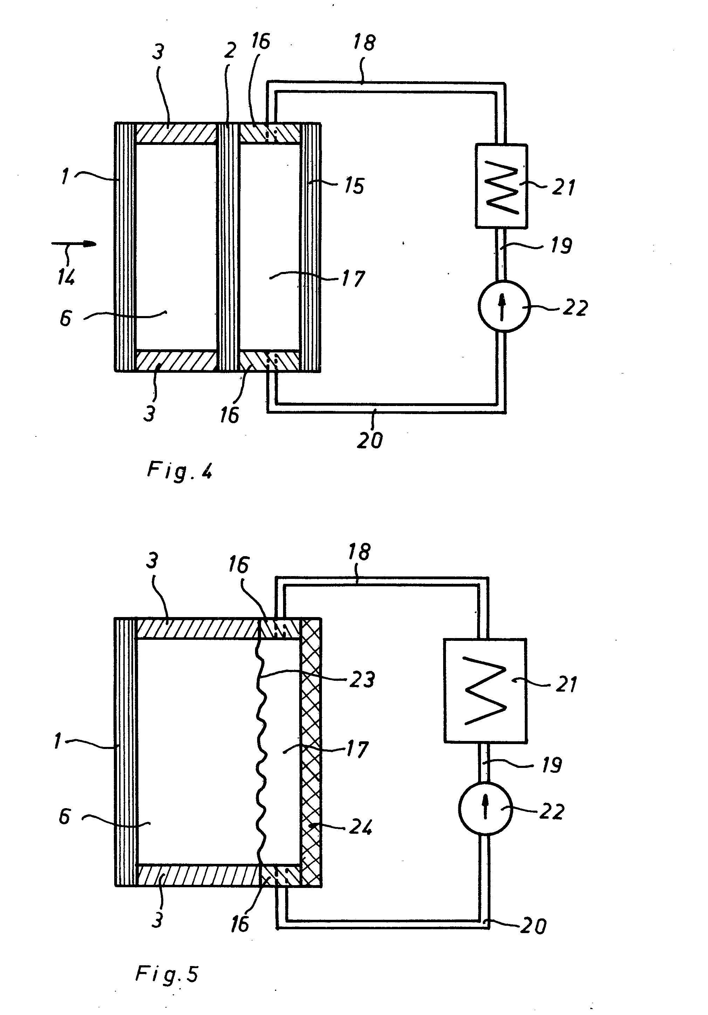

Bei der Ausführungsform eines Elementes nach Fig. 4 ist auf der der mit dem Pfeil 14 bezeichneten Einfallsrichtung der Wärmestrahlen abgewandten Seite des Elementes aus den Glasplatten 1 und 2 eine weitere Glasplatte 15 im Abstand angeordnet und durch einen umlaufenden Rahmen 16 gasdicht mit der Platte 2 verbunden. Der von dem umlaufenden Rahmen 16 und den Platten 2 und 15 gebildete Hohlraum 17 steht über Leitungen 18, 19 und 20 mit einem Wärmetauscher 21 und einer Umwälzpumpe 22 in Verbindung. In dem Hohlraum 17 ist ein lichtdurchlässiges Medium mit hoher Wärmeleitfähigkeit angeordnet. In dem aus den Glasplatten 1 und 2 und dem umlaufenden Rahmen 3 gebildeten Hohlraum 6 ist wiederum Kohlendioxyd angeordnet.

Durch die Ausführungsform des Elementes nach Fig. 4 wird, da Kohlendioxyd selber ein schlechter Wärmeleiter ist, mit Hilfe des im Hohlraum 17 angeordneten Mediums mit hoher Wärmeleitfähigkeit eine wirksame Abführung der durch die Wärmeeinstrahlung im Kohlendioxyd erzeugten Wärme gewährleistet.

Bei der Ausführungsform eines Elementes nach Fig. 5 ist die Glasplatte 2 durch eine dünne, schwarze Trennwand 23 ersetzt, die zur Vergrößerung der Oberfläche und damit zur besseren Wärmeübertragung gefaltet, gewellt oder gerippt ausgebildet ist. Weiterhin ist die Glasplatte 15 als isolierende Platte 24 ausgebildet. Der von der isolierenden Platte 24 und der Trennwand 23 und dem umlaufenden Rahmen 16 gebildete Hohlraum 17 ist mit einem Medium hoher Wärmeleitfähigkeit gefüllt, wobei dieser Hohlraum mit Leitungen 18, 19 und 20, einem Wärmetauscher 21 und einer Umwälzpumpe 22 in einem Wärmekreislauf angeordnet ist.

Der von der Platte 1 und der Trennwand 23 sowie dem umlaufenden Rahmen 3 gebildete Hohlraum ist wie bisher beschrieben mit Kohlendioxyd gefüllt.

Das in Fig. 5 beschriebene Element dient vorwiegend zur Aufnahme der Energie von Wärmestrahlen, insbesondere des eingestrahlten Sonnenlichtes. Durch die Glasscheibe 1 wird wiederum eine Spektralverschiebung des Sonnenlichtes in den Infrarotbereich bewirkt, so daß insgesamt die von dem im Hohlraum 6 befindlichen Kohlendioxyd aufgenommene Wärmeenergie sehr hoch ist. Weiterhin treten durch die vorgeschlagene Ausbildung der Elemente innerhalb des Elementes keine Temperatursprünge auf, wobei

außerdem eine sehr gute Wärmerückhaltung gewährleistet ist.

Die vorgeschlagene Ausbildung bietet weiterhin den innenliegenden Konstruktionsteilen einen Schutz vor Verwitterung, so daß nur eine geringe Alterung auftritt. Schließlich ist es bei dem Element nach Fig. 5 wegen der geschützten Anordnung der Trennwand erst möglich, für die Trennwand die wirkungsvollsten Werkstoffe und geometrischen Formen zu verwenden.

Patentansprüche

1. Zum Einbau in Fenster-, Tür-, Dachöffnungen o.dgl. bestimmtes Element zur Absorption der Energie von Wärmestrahlen, bestehend aus zwei im Abstand zueinander angeordneten und durch einen umlaufenden Rahmen gasdicht miteinander verbundenen Platten, wobei die in Einfallsrichtung der Wärmestrahlen liegende Platte lichtdurchlässig ist und wobei in dem von den Platten und dem umlaufenden Rahmen begrenzten Hohlraum ein Wärmestrahlen absorbierendes Medium angeordnet ist, dadurch gekennzeichnet, daß der Hohlraum (6) mindestens zu 10 Volumenprozent mit Kohlendioxyd ($CO_2$) gefüllt ist.

2. Element nach Anspruch 1, dadurch gekennzeichnet, daß beide Platten ( 1, 2 ) als lichtdurchlässige Glasscheiben ausgebildet sind.

3. Element nach einem der Ansprüche 1 oder 2, dadurch gekennzeichnet, daß die den Hohlraum (6) begrenzenden Rahmenflächen (25) gewellt, gerippt oder gefaltet ausgebildet sind.

4. Element nach einem der Ansprüche 1 bis 3, dadurch gekennzeichnet, daß im Rahmen (3) Kanäle (8) zur Aufnahme von Wärmeübertragungsmitteln angeordnet sind.

5. Element nach Anspruch 4, dadurch gekennzeichnet, daß in den Kanälen (8) ein Medium hoher Wärmeleitfähigkeit angeordnet ist und die Kanäle mit einem einen Wärmetauscher aufweisenden Wärmekreislauf verbunden sind.

6. Element nach einem der Ansprüche 1 bis 5, dadurch gekennzeichnet, daß in einander gegenüberliegenden Rahmenabschnitten verschließbare Durchtrittsöffnungen (4, 5) für das Kohlendioxyd ($CO_2$) angeordnet sind.

7. Element nach Anspruch 6, dadurch gekennzeichnet, daß die Durchtrittsöffnungen (4,5) mit einem einen Wärmetauscher (10) aufweisenden Wärmekreislauf (9, 11, 12, 13) verbunden sind.

8. Element nach einem der Ansprüche 1 bis 7, dadurch gekennzeichnet, daß auf der der Einfallsrichtung der Wärmestrahlen abgewandten Seite des Elementes im Abstand zu den beiden Platten (1, 2) eine weitere

0039401

- 13 -

Platte (3) angeordnet und durch einen umlaufenden
Rahmen (16) gasdicht mit dem Element verbunden ist,
daß im von den Platten (2,3) sowie dem umlaufenden
Rahmen (16) begrenzten Hohlraum (17) ein Medium mit
hoher Wärmeleitfähigkeit angeordnet ist und daß der
Hohlraum mit einem einen Wärmetauscher (21) aufweisenden Wärmekreislauf (18, 19, 20, 22) in Verbindung
steht.

9. Element nach Anspruch 8, dadurch gekennzeichnet,
daß alle drei Platten (1, 2, 15) als lichtdurchlässige
Glasplatten ausgebildet sind.

10. Element nach einem der Ansprüche 1 bis 9, dadurch gekennzeichnet, daß die mittlere Platte als
dünne, eine hohe Wärmeleitfähigkeit aufweisende Trennwand (23) ausgebildet ist.

11. Element nach Anspruch 10, dadurch gekennzeichnet, daß die Trennwand (23) zur Vergrößerung der Oberfläche gewellt, gefaltet oder gerippt ist.

12. Element nach einem der Ansprüche 10 oder 11,
dadurch gekennzeichnet, daß die mittlere Trennwand (23) schwarz ist.

13. Element nach einem der Ansprüche 10 bis 12, dadurch gekennzeichnet, daß die weitere Platte als isolierende Platte (24) ausgebildet ist.

14. Element nach einem der Ansprüche 1 bis 13, dadurch gekennzeichnet, daß der Druck des im Hohlraum (6) angeordneten Kohlendioxyd ($CO_2$) maximal 2 bar beträgt.

15. Element nach einem der Ansprüche 1 bis 14, dadurch gekennzeichnet, daß dem im Hohlraum (6) angeordneten Kohlendioxyd ($CO_2$) ein Stabilisatorgas zugefügt ist.

Fig. 1

Fig. 2

Fig. 3

Fig. 4

Fig. 5

Europäisches
Patentamt

**EUROPÄISCHER RECHERCHENBERICHT**

Nummer der Anmeldung

EP 81101878.7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 551 987 (JAN KLOOS) <br><br> + Seite 5, Zeilen 10-22; <br> Seite 6, Zeilen 15-21; <br> Anspruch 5 + <br><br> -- | 1,2,6 |
| | DE - A1 - 2 736 137 (PETER SCHMEISSER) <br><br> + Seite 4, Zeilen 19-34; <br> Seite 5, Zeilen 14, 15, <br> 26-37; Seite 6, Zeilen <br> 1,2 + <br><br> -- | 1,2,8, 9,12, 13 |
| A | DE - A1 - 2 815 056 (PETER TEUBER) <br><br> + Gesamt + <br><br> ---- | 1 |

**KLASSIFIKATION DER ANMELDUNG (Int. Cl.³)**

F 24 J 3/02

**RECHERCHIERTE SACHGEBIETE (Int. Cl.³)**

F 24 J 3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde
    liegende Theorien oder
    Grundsätze
E: kollidierende Anmeldung
D: in der Anmeldung angeführtes
    Dokument
L: aus andern Gründen
    angeführtes Dokument
&: Mitglied der gleichen Patent-
    familie, übereinstimmendes
    Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 07-07-1981 | ENDLER |

EPA form 1503.1  06.78